# EUROPÄISCHE PATENTSCHRIFT

(11) **EP 3 071 625 B1**
(45) Veröffentlichungstag und Bekanntmachung des Hinweises auf die Patenterteilung: **18.08.2021**
(21) Anmeldenummer: 14799749.8
(22) Anmeldetag: 17.11.2014
(51) Int. Cl.: C08G 63/181, C09J 7/21

(54) **VERWENDUNG EINES KLEBEBANDES UMFASSEND EIN BIOBASIERTES TRÄGERMATERIAL ENTHALTEND EINEN BIOBASIERTEN POLYESTER ZUM UMMANTELN VON LANGGESTRECKTEM GUT**
USE OF AN ADHESIVE TAPE COMPRISING A BIO-BASED CARRIER MATERIAL COMPRISING A BIO-BASED POLYESTER FOR SHEATHING ELONGATED GOODS
UTILISATION D'UN RUBAN ADHÉSIF COMPRENANT UN SUPPORT D'ORIGINE VÉGÉTALE COMPRENANT UN POLYESTER D'ORIGINE VÉGÉTALE POUR LE GAINAGE DE PRODUITS ALLONGÉS

(30) Priorität: 18.11.2013 DE 102013223496
(43) Veröffentlichungstag der Anmeldung: 28.09.2016
(73) Patentinhaber: tesa SE, 22848 Norderstedt (DE)
(72) Erfinder: MÜSSIG, Bernhard, 21218 Seevetal (DE); NEUBERT, Ingo, 22850 Norderstedt (DE); SIEBERT, Michael, 22869 Schenefeld (DE)
(74) Vertreter: tesa SE
(86) Internationale Anmeldenummer: PCT/EP2014/074707
(87) Internationale Veröffentlichungsnummer: WO 2015/071448

(56) Entgegenhaltungen:
- WO-A1-2010/077133
- WO-A1-2012/125701
- WO-A1-2013/062408
- WO-A1-2013/062408
- WO-A1-2013/144525
- WO-A1-2013/149222
- WO-A2-03/020803
- US-A1- 2013 171 397
- Alessandro Gandini ET AL: "The furan counterpart of poly(ethylene terephthalate): An alternative material based on renewable resources", JOURNAL OF POLYMER SCIENCE, PART A: POLYMER CHEMISTRY, vol. 47, no. 1, 1 January 2009 (2009-01-01), pages 295-298, XP055386787, US ISSN: 0887-624X, DOI: 10.1002/pola.23130

## Beschreibung

Die vorliegende Erfindung bezieht sich auf die Verwendung eines Klebebandes zum Ummanteln von langgestrecktem Gut, wobei das Klebeband ein biobasiertes Trägermaterial aufweist, umfassend einen biobasierten Polyester basierend auf mindestens zwei unterschiedlichen biobasierten Monomeren, gewonnen aus Biomasse enthaltend Kohlenhydrate, worin das mindestens eine biobasierte Monomer ein Furanderivat, bevorzugt ein Ester-Furanderivat, ist, welches zur Herstellung eines biobasierten Polyester geeignet ist. Das zweite biobasierte Monomer ist eine hydroxyfunktionelle Verbindung, vorzugsweise eine alpha-, omega-dihxydroxyfunktionelle Verbindung. Nachweisbar ist die biologische Herkunft aus einer Biomasse oder regenerativem Rohstoff über die Bestimmung des Verhältnisses von ¹⁴C/¹³C-Atomen im Polymer oder in den jeweiligen Monomeren.

Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen. Im Folgenden wird diese Norm verkürzt mit LV 312 bezeichnet.

Die Geräuschdämpfung, die Abriebbeständigkeit sowie die Temperaturbeständigkeit eines Klebebandes werden anhand definierter Prüfaufbauten und Prüfverfahren bestimmt, wie sie ausführlich in der LV 312 beschrieben sind.

Kabelwickelbänder sind mit Folien- und Textilträger verbreitet, die in der Regel einseitig mit unterschiedlichen Haftklebemassen beschichtet sind, wobei Kabelwickelbänder drei Hauptanforderungen erfüllen müssen:
a) leichte Abwickelbarkeit: Das in Rollenform dargereichte Produkt muss für eine einfache Verarbeitung leicht abwickelbar sein.
b) Abflaggresistenz: Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und des Durchmessers des Kabelsatzes. In der Praxis dürfen Klebebandenden sich nicht selbsttätig ablösen.
c) Kabelverträglichkeit: Die Kabelisolierung darf nicht durch den Einfluss des Klebebandes in Kombination mit erhöhter Temperatur über längeren Zeitraum verspröden. Unterschieden wird hier nach der LV 312 zwischen vier Temperaturklassen A bis D, entsprechend 80 °C (auch Temperaturklasse A genannt), 105 °C (auch Temperaturklasse B genannt), 125 °C (auch Temperaturklasse C genannt) und 150 °C (auch Temperaturklasse D genannt), denen die umwickelten Kabel ohne Versprödung über 3000 h standhalten müssen, wobei die Temperaturklassen C und D höhere Ansprüche an das Klebeband stellen als die unteren Klassen A und B. Über die Einstufung A bis D entscheiden sowohl das Kabelisolierungsmaterial als auch Haftklebemasse und Trägertyp.

Als Trägertypen auch im Sinne der Erfindung kommen vor allem textile Träger zum Einsatz, unter anderem Folien, Vliese, Schäume, Gewebe und Kombinationen dieser Trägertypen in Betracht. Bisher verwendete Ausgangsmaterialien für die Herstellung eines Trägers sind Polymere, insbesondere synthetische Polymere aus Polyester, Polypropylen, Polyamid, Polyimid, Aramid, Polyolefin wie Polyethylene hoher oder geringer Dichte, Nylon, Polyvinylalkohole und Polyacrylonitrile oder Glas.

Ferner enthält die US 2011/0256397 A1 weitere Beispiele für synthetische polymere Materialien, die in Nanofasern, Filmen, Vliesen und Geweben verwendet werden und umfassen zusätzlich zu den bereits genannten Polystyrol, Polycarbonate, Polyacrylsäure, Polymethylacrylat, Polyvinylchlorid, Polyethylenterephthalat, Polyurethan, Polymilchsäure, Polycaprolacton, Polyethylenglycol, Polyvinylacetat und Polyethylenoxid.

Am meisten verbreitet sind Polymere mit Ester-Gruppen in der Hauptkette. Zu solchen synthetischen Polyestern zählt bevorzugt das thermoplastische Polyethylenterephthalat (PET), das insbesondere in der Textilindustrie sowie Verpackungsindustrie zum Einsatz kommt. Dabei unterscheiden sich die Anforderungen an das Material in der Verarbeitbarkeit, Erscheinungsbild (Transparenz), Temperatursensibilität/-stabilität, Durchlässigkeit, Permeabilität, Geruchsneutralität, Flexibilität beziehungsweise Stabilität je nach Verwendung.

Für Träger von Klebebändern werden bislang Polyester bevorzugt verwendet (JP 2004 024 958 A, JP 2001 003 019 A, US 6,063,492 B und EP 0 821 044 A2). Als Polyester wird PET aufgrund seiner Kerneigenschaften, insbesondere aufgrund seiner vergleichsweise hohen Härte, Festigkeit, Steifigkeit, Abriebfestigkeit, Witterungs- und Heißluftbeständigkeit und geringen Wasseraufnahme, als bevorzugtes Ausgangsmaterial verwendet. Durch die Verwendung von PET für Klebebänder haben solche Klebebänder den Nachteil hoher Steifigkeit.

Die Anforderungen der Flexibilität eines Trägers für Klebebänder wurden bislang zum Beispiel durch Copolymere erzielt. Die US 2007/0261879 A1 beschreibt zum Erreichen einer ausreichenden Flexibilität von Wickelfolien zur Bündelung, zum Schutz, zur Kennzeichnung, Isolierung und Abdichtung von Drähten und Kabeln und zur Kabelummantelung die Verwendung eines Copolymers aus Polypropylen und Polyolefin.

Die bislang verwendeten Ausgangsmaterialien zur Herstellung von Polymeren stammen aus nicht regenerativen Rohstoffen, sind synthetisch hergestellt und nicht bioabbaubar.

Das steigende Umweltbewusstsein sowie reduzierte Verfügbarkeit von fossilen Rohstoffen erhöhen den Bedarf an bioabbaubaren und regenerativen Materialien. Insbesondere solcher Materialien, die gleichwertig und gleichwirkend ohne Einschränkung in Funktionalität und Qualität im Vergleich zu den synthetischen Materialien sind.

In einigen Schriften wurden bereits Polymere beschrieben, die aus regenerativen Rohstoffen hergestellt werden oder teilweise kompostierbare beziehungsweise bioabbaubar sind. Wie den Druckschriften (JP 2008 303 488 A, JP 2005 023 484 A, US 5,525,409) zu entnehmen ist, handelt es sich bei den bioabbaubaren Polymeren meist um aliphatische Polyester wie Polymilchsäure, die zur Herstellung bioabbaubarer Kunststoffartikel wie Kleidung, Materialien im Sanitärbereich und medizinischen Bereich, Verpackungsmaterial und für Textilien für Klebebänder verwendet werden. Es gab auch Bestrebungen, das synthetische PET durch biobasierte Bausteine zu modifizieren. So wird in der EP 1 140 231 B1 ein bioabbaubares Copolymer enthaltend PET und Polyhydroxyalkanoat zur Herstellung von Plastikartikeln wie Fasern, Schaumstoff, Vlies, Elastomer, Klebstoff und flächige Strukturen beschrieben.

Dennoch besteht weiterhin Bedarf an biobasierten Polymeren, insbesondere biobasierten Polyestern, welche die für einen Träger für Klebebänder erforderlichen Eigenschaften vergleichbar mit denen des PET aufzeigen.

Es ist bekannt, dass pro Jahr ungefähr 200 Billionen Tonnen an Biomasse mit 95 % Kohlenhydrate entstehen. Bislang werden allerdings nur 3 bis 4 % der Kohlenhydrate wiederverwertet. Folglich entstehen jährlich enorme Mengen nicht genutzter Quellen für Ausgangsmaterialien. Es existiert somit ein großer Bedarf und ein enormes Potential zur Nutzung der Biomasse als Quelle zur Herstellung von nicht Rohöl basierenden Chemikalien, welche vollständig regenerativ sind. Vorteilhaft sollen regenerative Rohstoffe auf Basis von Holz, Stroh, Halmen, Schilf, Hüllen von Nahrungsmittel wie Reishüllen sowie weiterer Reste von Nutzpflanzen oder Reste von Pflanzen der Nahrungsmittelgewinnung sein.

Daher bestehen vielseitige Anstrengungen, aus Biomasse Ausgangsmaterialien zu gewinnen, welche zur Herstellung von alternativen Verbindungen für die Synthese von Polymeren, insbesondere Polyester dienen können. Ein solcher Baustein ist die Furan-2,5-Dicarbonsäure (FDCA), die bereits 1960 in der DE 10 95 281 A beschrieben wurde.

Die US 2009/124829 A beschreibt eine Terephthalsäure und ein Verfahren zur Herstellung dieser aus Furan-2,5-dicarbonsäure, wobei die Furan-2,5-dicarbonsäure als regeneratives Ausgangsmaterial aus Biomasse, umfassend Pflanzen, Getreide, Energiepflanzen, Lignocellulose (Holz), Abfallströme, Papierabfälle und landwirtschaftliche Abfälle, gewonnen wird. Dabei wird die Furan-2,5-dicarbonsäure durch enzymatischen oder mikrobiellen Abbau der Kohlenhydrate über Zucker und diese anschließend zu 5-Hydroxymethylfurfural, und das 5-Hydroxymethylfurfural zu Furan-2,5-dicarboxylat (FDCA) oxidiert.

Aufgrund der strukturellen Ähnlichkeit der Furan-2,5-dicarbonsäure (FDCA) und der Terephthalsäure wird FDCA als alternativer Baustein für teilweisen oder gänzlichen Ersatz in Polyestern angesehen. Bereits Jaroslaw Lewkowski, ARKIVOC 2001 (i), Seiten 17 bis 54, ISSN 1424-6376, mit dem Titel "Synthesis, Chemistry and Applications of 5-hydroxymethylfurfural and its derivatives" enthält eine umfassende Zusammenfassung zu Furan-2,5-dicarbonsäure, Anwendungsmöglichkeiten sowie dessen Synthese. Darauf aufbauend wurden adaptierte Verfahren zur Herstellung von FDCA entwickelt.

Partenheimer et al beschreiben die Synthese von Furan-2,5-dicarboxysäure durch katalytische Luftoxidation von 5-Hydroxymethylfurfural mit dem Mwtal/Bromid-Katalysator Co/Mn/Br (Adv. Synth. Catal. 2001, 343, pp 102-1 1).

Neben dem Einsatz der Furan-2,5-dicarbonsäure als alternative Verbindung zur Terephthalsäure in PET wird die Furan-2,5-dicarbonsäure als Additiv bei der Herstellung von Polymeren verwendet.

Die US 2012/202725 A sowie US 2012/220507 A und WO 2012/113608 A beschreiben den Einsatz von FDCA zur Herstellung einer Estermischung, zum Beispiel Pentylester, zur Verwendung als Weichmacher für unter anderem Klebstoffe und Klebstoffbestandteile. Weitere Dialkylester aus 1 bis 13 C-Atomen der Furandicarbonsäure werden in der WO 2012/113607 A beschrieben, welche als Weichmacher eingesetzt werden. Ferner wird die Verwendung der Weichmacher für Polymere zum Beispiel PVC in unter anderem Klebstoffen, Dichtungsmassen, Beschichtungsmassen, Plastisolen, Pasten, Fußbodenbelägen, Gewebebeschichtungen, Kabeln und Drahtisolierungen, Folien oder in Automobilinnenanwendungen beschrieben. Diese Polymere werden zur Herstellung von Folie, wobei die Folie unter anderem eine Dichtungsbahn, eine Kabel- oder Drahtummantelung, eine Verpackungsfolie, ein Automobilinnenraumartikel oder ein Einrichtungsgegenstand ist, eingesetzt.

Ferner wird Furan-2,5-dicarbonsäure nicht als Ausgangsmaterial zur Herstellung von Terephthalsäure, sondern als Baustein eines alternativen Polyesters zu PET, nämlich das Polyethylenfuranoat (PEF), in der Lebensmittelverpackungsindustrie verwendet. In PEF wird das erdölbasierte Monomer Terephthalsäure (TA), das hauptsächlich für die Herstellung von PET verwendet wird, ersetzt. Es entsteht der Biokunststoff PEF (Polyethylenfuranoat), in dem das Furanoat biobasiert ist und der mit dem Rohstoff PET vergleichbar ist.

Weitere Anwendungsmöglichkeiten von Polyethylenfuranoat werden für die Herstellung von Fasern (Bekleidung, Teppiche, Sportartikel) sowie Filmen (flexible Verpackung und Behältnisse zum Beispiel für Lebensmittel oder Kosmetik) diskutiert. Allerdings wurde hierzu bislang nichts publiziert. Ferner wurde noch nichts zu der Verwendung von biobasierten Polymeren, insbesondere Polyestern für Trägermaterialien berichtet, die gleichzeitig die funktionellen und qualitativen Eigenschaften aufweisen, wie die bislang genutzten synthetischen Polyester. Die für Trägermaterialien verwendeten synthetischen Polyester, insbesondere PET, PC und PVC, haben alle den Nachteil, dass sie aus Rohöl basierenden Verbindungen hergestellt werden, wodurch eine starke Belastung der Umwelt und hohe Kosten resultieren. Bekannt ist aber, dass biobasiertes Ethylenglykol zur Herstellung von PET, sogenanntem Bio-PET, verwendet wird und potentiell auch zur Herstellung von PEF verwendet werden kann.

Ferner ist der Nachteil darin zu sehen, dass die Rohstoffe aus Rohöl auf einer endlichen Ressource basieren, deren Abbau mit enormen Kosten verbunden ist. In der heutigen Generation ist neben der Kostenfrage gleichfalls die Verantwortung der nachkommenden Generationen gegenüber zu berücksichtigen und mit Rohstoffen nachhaltig umzugehen.

Ein weiterer Nachteil, insbesondere bei der Verwendung von PET, ist die hohe Dichte und damit hohe Steifigkeit von Klebebändern, insbesondere von Klebebändern für die Kabelbündelung.

Aus der WO 03/020803 A2 ist eine haftfähige Folie bekannt, die im Wesentlichen biologisch abbaubar ist. Die biologisch abbaubare Folie kann aus Polyester gefertigt sein. Auf wenigstens einer Oberfläche der Folie ist eine Schicht mit biologisch abbaubarem Haftmittel aufgebracht.

Daher ist ein Ziel der vorliegenden Erfindung, ein Klebeband, und zwar ein solches zur Verwendung zum Ummanteln von langgestrecktem Gut, bevorzugt mit ausreichender Elastizität und handlich guter Verarbeitbarkeit, umfassend ein biobasiertes Trägermaterial, enthaltend einen biobasierten Polyester zur Verfügung zu stellen. Der biobasierte Polyester soll aus Verbindungen abgeleitet von Biomasse gewonnen werden und soll gleichzeitig die funktionellen und qualitativen Eigenschaften aufweisen, vergleichbar mit denen der im Stand der Technik genutzten synthetischen Polyester oder sogar besser. Eine vorrangige Aufgabe ist es, ein vollständig biobasiertes PEF basierend auf Furanoat und einer hydroxyfunktionellen Verbindung bereitzustellen.

Die Lösung der Aufgabe wird durch den Gegenstand des unabhängigen Patentanspuchs beschrieben sowie in konkreter Ausgestaltung in den Unteransprüchen als auch detailliert in der Beschreibung dargestellt.

Ein Gegenstand der vorliegenden Erfindung ist es, ein Klebeband, das zum Ummanteln von langgestrecktem Gut verwendet wird, bereitzustellen, umfassend ein biobasiertes Trägermaterial, wobei das biobasierte Trägermaterial in Form von Flächenelementen umfassend gesponnene, gewebte und/oder geschmolzene Flächenelemente vorliegt, enthaltend einen biobasierten Polyester basierend auf mindestens zwei unterschiedlichen biobasierten Monomeren, insbesondere auf regenerativem Ausgangsmaterial basierenden Monomeren. Alle erfindungsgemäßen Monomere werden aus Biomasse enthaltend Kohlenhydrate gewonnen und gelten somit als biobasierte Monomere, worin mindestens eines der biobasierten Monomere ein Furanderivat nach Formel I ist, 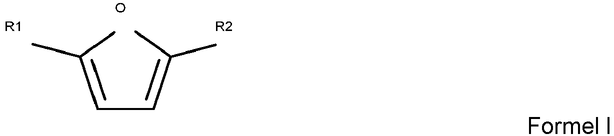 worin jeweils unabhängig voneinander
R1 eine Carboxy-Gruppe ist und als Substituent eine lineare, verzweigte und/oder cyclische unsubstituierte oder substituierte Kohlenwasserstoff-Gruppe mit 1 bis 20 C-Atomen enthält, die optional O, N oder S-Atome enthält, oder eine Carbonsäure-Gruppe ist oder ein Anhydrid ist,
R2 eine Carboxy-Gruppe ist und als Substituent eine lineare, verzweigte und/oder cyclische unsubstituierte oder substituierte Kohlenwasserstoff-Gruppe mit 1 bis 20 C-Atomen umfasst, oder eine Carbonsäure-Gruppe ist oder ein Anhydrid ist das zweite biobasierte Monomer eine hydroxyfunktionelle Verbindung umfassend 1 bis 100 C-Atome ist, insbesondere basierend auf einer Biomasse, wobei der Polyester ein mittleres Molekulargewicht Mw größer gleich 1.000 g/mol aufweist und der Anteil an biobasierten Monomeren im biobasierten Polyester größer gleich 55 mol-% in Bezug auf den gesamten biobasierten Polyester oder die biobasierten Polyester ist, wobei der Anteil an biobasierten Monomeren des biobasierten Polyesters bestimmt wird über das Verhältnis von 14C/12C-Kohlenstoffatomen, wobei
- auf mindestens einer der beiden Oberflächen biobasierten Trägermaterials
- mindestens eine Klebemasse vorhanden ist, die teilweise oder vollständig in den Träger eingesunken sein kann, und
- optional mindestens ein Deckmaterial und/oder Transfermaterial vorhanden ist.

Biobasiert heißt, hergestellt aus nachwachsenden Rohstoffen.

Bioabbaubare Polymere ist eine Bezeichnung für natürliche und synthetische Polymere, die Kunststoff ähnliche Eigenschaften (Kerbschlagzähigkeit, Thermoplastifizierbarkeit) aufweisen, aber im Gegensatz zu konventionellen Kunststoffen von einer Vielzahl von Mikroorganismen in biologisch aktiver Umgebung (Kompost, Faulschlamm, Erde, Abwasser) abgebaut werden; dies passiert nicht notwendigerweise unter üblichen Haushaltsbedingungen (Kompostierung im Garten). Eine Definition der Bioabbaubarkeit findet sich in den Europäischen Normen DIN EN 13432 (biologischer Abbau von Verpackungen) und DIN EN 14995 (Kompostierbarkeit von Kunststoffen).

Vorzugsweise beträgt der Anteil an biobasierten Monomeren größer gleich 60 mol-% bis 100 mol-% in Bezug auf den biobasierten Polyester, insbesondere größer gleich 65 mol-%, 70 mol-%, 75 mol-%, 80 mol-%, 85 mol-%, 90 mol-%, besonders bevorzugt sind größer gleich 95 bis 100 mol-% biobasierte Monomere im biobasierten Polyester. Der Anteil an biobasiertem Monomer im Polyester kann ermittelt werden, indem der Polyester biologisch zu CO₂ abgebaut wird und das Verhältnis von ¹⁴C/¹²C-Atomen bestimmt wird. Dieses Verhältnis kann dann in Bezug gesetzt werden mit einem Verhältnis von ¹⁴C/¹²C-Atomen in Kohlenstoffquellen biologischen Ursprungs (biologischer Ursprung auf der Erdoberfläche) wie Biomasse zu dem Verhältnis von ¹⁴C/¹²C-Atomen, wie es in rohölbasierten Produkten vorliegt. Die Methode der Wahl ist ASTM D6866-04, sie wird im experimentellen Teil näher erläutert. Alternativ kann die Ermittlung, ob das eingesetzte jeweilige Monomer biobasiert oder rohölbasiert ist, vor der Polymerisation erfolgen. In diesem Fall kann auf einfache Weise der Anteil an biobasierten Monomeren beispielsweise vorab in der C₆-Furandicarbonsäure oder einem Diester der Furandicarbonsäure und im Ethylenglykol bestimmt werden. Nicht als Biomasse gelten Monomere aus fermentierten Produkten auf Rohölbasis.

Eine weitere Methode zur Bestimmung des Ursprungs ist die Ermittlung der Isotopen-Muster, insbesondere ¹³C-Isotopen-Muster, in organischen Molekülen, den biobasierten Monomeren oder biobasiertem Polyester über eine Isotopomeren-Analyse. So ist die Analyse von ¹³C/¹²C-, ¹⁵N/¹⁴N- sowie ³⁴S/³²S-Verhältnissen in der Ökologie heute weit verbreitet und kann auf den biobasierten Polyester angewendet werden. Anhand der Fraktionierung lassen sich Stoffflüsse und die Herkunft der Biomassen, der biobasierten Monomere nachverfolgen. Eine übliche Methode ist die Compound Specific Isotope Analysis (CSIA).

Vorzugsweise weist der biobasierte Polyester lineare, cyclische und/oder verzweigte Ketten auf. Der Polyester ist vorzugsweise ein Co-Polymer und mindestens ein Tetramer umfassend mindestens zwei biobasierte Monomere nach Formel I und zwei biobasierte hydroxyfunktionelle Verbindungen, vorzugsweise Diole, alpha-, omega-Diole oder Polyhydroxykohlenwasserstoffe, bevorzugt mindestens ein Octamer umfassend mindestens vier biobasierte Monomere nach Formel I und vier hydroxyfunktionelle Verbindungen. Ein zweckmäßiges Prepolymer ist vorzugsweise ein Copolymer umfassend mindestens ein biobasiertes Monomer nach Formel I und mindestens eine biobasierte hydroxyfunktionelle Verbindung, vorzugsweise ein Diol. In einer besonderen Ausgestaltung ist das Polymer ein Copolymer umfassend ein biobasiertes Monomer nach Formel II und ein biobasiertes Diol umfassend Glykol. Besonders bevorzugt ist das Copolymer ein Polyethylenfuranoat nach Formel IV mit n größer gleich 2, vorzugsweise mit n größer gleich 6.

Ferner sind Polymere im Sinne der Erfindung Homopolymere oder Copolymere umfassend statistische, alternierende, Gradienten- und Block-Copolymere.

"Biobasiert" im Sinne der Erfindung bedeutet ein nicht-synthetisches Material natürlichen Ursprungs und "regenerativ" im Sinne der Erfindung bedeutet erneuerbar. Somit werden im Sinne der Erfindung bevorzugt Ausgangsmaterialien natürlichen Ursprungs verwendet, die erneuerbar sind. Bevorzugt wird eine solche Biomasse verwendet, die ein hohes Energiepotential aufweist, ausgewählt aus pflanzlicher Herkunft wie Holz, Naturfasern, Schilf, Stroh, Heu, Kohlenhydrate, Cellulosen, Pflanzenöle sowie Zucker und Stärke, zum Beispiel Zuckerrüben. Bevorzugt werden biogene Abfallprodukte wie landwirtschaftliche Abfälle und Lebensmittelabfälle verwendet. Die in der Biomasse enthaltenen Kohlenhydrate oder Saccharide umfassen im Sinne der Erfindung Verbindung der Stoffgruppen Polyhydroxy-alkanale, -alkanone, -tetrahydrofurane, -tetrahydropyrane, -oxepane und -alkansäuren. Diese umfassen Aldosen, Ketosen, Ketoaldosen, Desoxyzucker, Aminozucker und Derivate davon. Bevorzugt sind Mono-, Di-, Oligo- und Polysaccharide (unter anderem Zucker und Stärke). Diese Verbindungen können glykosidische Bindungen enthalten und zu Zwei- und Mehrfachzuckern verkettet sein. Beispiele für Monosaccharide sind, ohne eine Einschränkung vorzunehmen, Pentosen und Hexosen, wie D-Xylose, D-Ribose, D-Glukose, D-Mannose, D-Galaktose, D-Rhamnose und D-Fruktose sowie Maltose und Trehalose. Bevorzugte Zucker sind Pentosen und Hexosen.

Gegenstand ist es, einen biobasierten Polyester bereitzustellen, worin R1 eine Carboxy-Gruppe ist und als Substituent eine lineare, verzweigte und/oder cyclische unsubstituierte oder substituierte Kohlenwasserstoff-Gruppe mit 1 bis 20 C-Atomen, eine Carbonsäure-Gruppe oder ein Carbonsäureanhydrid-Gruppe enthält. Insbesondere ist die Kohlenwasserstoff-Gruppe eine Alkyl-, Alkylaryl-, Alkylen- oder Aryl-Gruppe oder ein Polyhydroxykohlenwasserstoff wie Zucker, wobei die Kohlenwasserstoff-Gruppe optional O, N oder S-Atome enthält, und R2 eine Carboxy-Gruppe und umfasst als Substituent eine lineare, verzweigte und/oder cyclische unsubstituierte oder substituierte Kohlenwasserstoff-Gruppe mit 1 bis 20 C-Atomen, eine Carbonsäure-Gruppe oder ein Carbonsäureanhydrid-Gruppe.

Die "Kohlenwasserstoff-Gruppe" im Sinne der Erfindung entspricht Kohlenwasserstoffverbindungen, die gesättigt oder ungesättigt sein können, umfassend Alkane, Cycloalkane, Alkene, Alkine und homo- sowie heterozyklische Aromaten. Die Alkane umfassen Methyl-, Ethyl-, Propyl-, Butyl- über Decyl- bis zu Cosyl-Gruppen.

Insbesondere können die Kohlenwasserstoff-Gruppen an R1 und/oder R2 jeweils unabhängig voneinander einen oder mehrere Substituenten aufweisen, ausgewählt aus der Gruppe umfassend Wasserstoff, -O, -OH, -CO-OH, ein Ester wie -CO-OR3, worin R3 eine Gruppe aus 1 bis 10 C-Atomen umfasst, oder-(CO)H,

Weiterhin soll ein biobasierter Polyester bereitgestellt werden, der mindestens zwei biobasierte Monomere enthält, wobei mindestens eines davon einem Furanderivat nach Formel II entspricht, 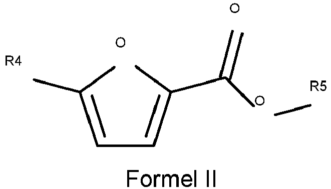 worin R4 eine Carboxy-Gruppe ist und als Substituent eine lineare, verzweigte und/oder cyclische unsubstituierte oder subsituierte Kohlenwasserstoff-Gruppe mit 1 bis 20 C-Atomen. Insbesondere kann die Kohlenwasserstoff-Gruppe eine Alkyl-, Alkylaryl-, Alkylen- oder Aryl-Gruppe oder ein Polyhydroxykohlenwasserstoff wie Zucker sein, wobei die Kohlenwasserstoff-Gruppe optional O, N oder S-Atome enthält. Bevorzugte Kohlenwasserstoff-Gruppen an R4 sind Methyl, Ethyl, Propyl, Butyl und Hexyl.

Ferner wird R5 ausgewählt aus der Gruppe, welche eine lineare, verzweigte und/oder cyclische unsubstituierte oder substituierte Kohlenwasserstoff-Gruppe mit 1 bis 20 C-Atomen umfasst. Insbesondere kann die Kohlenwasserstoff-Gruppe eine Alkyl-, Alkylaryl-, Alkylen- oder Aryl-Gruppe oder ein Polyhydroxykohlenwasserstoff wie Zucker sein, wobei die Kohlenwasserstoff-Gruppe optional O, N oder S-Atome enthält.

Insbesondere wird das biobasierte Monomer nach Formel I und/oder Formel II aus mindestens einem Premonomer gewonnen, welches mindestens einem Furanderivat nach Formel III entspricht, 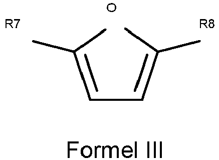 worin R7 ausgewählt wird aus der Gruppe, welche eine lineare, verzweigte und/oder cyclische unsubstituierte oder substituierte Kohlenwasserstoff-Gruppe mit 1 bis 20 C-Atomen, die optional O, N oder S-Atome enthält, -CO-R9, -(CH₂)ₓ-O-R9, -O-R9 und Wasserstoff umfasst,
R8 ausgewählt wird aus der Gruppe, welche eine lineare, verzweigte und/oder cyclische unsubstituierte oder substituierte Kohlenwasserstoff-Gruppe mit 1 bis 20 C-Atomen, die optional O, N oder S-Atome enthält, und -CO-R9, -(CH₂)ₓ-O-R9, -O-R9 und Wasserstoff umfasst, wobei R9 jeweils unabhängig voneinander ausgewählt wird aus der Gruppe, welche eine lineare, verzweigte und/oder cyclische unsubstituierte oder substituierte Kohlenwasserstoff-Gruppe mit 1 bis 20 C-Atomen, die optional O, N oder S-Atome enthält, und Wasserstoff umfasst und x jeweils unabhängig voneinander eine ganze Zahl zwischen 1 und 10 ist, vorzugsweise größer gleich 1 bis 8, besonders bevorzugt größer gleich 1 bis 6. Die Kohlenwasserstoff-Gruppe in R7, R8 und R9 kann jeweils unabhängig voneinander eine Alkyl-, Alkylaryl-, Alkylen- oder Aryl-Gruppe oder ein Polyhydroxykohlenwasserstoff wie Zucker sein, wobei die Kohlenwasserstoff-Gruppe optional O, N oder S-Atome enthält.

Insbesondere kann das Premonomer ein Furanderivat nach Formel III wie ein Alkoxymethylfuran (Furanether R7=-O-R9), bevorzugt ein 2,5-Bis(alkoxymethyl)furan, oder ein Furfural (Furanaldehyd, R-(C=O)H) ausgewählt aus der Gruppe umfassend Alkoxymetyhlfurural, 5-Hydroxymethylfurfural (HMF), 2-Ethoxymethylfurfural (EMF) und 5-Ethoxymethylfurfural (EMF) sein. Es können auch Mischungen enthaltend mindestens zwei Furanderivate nach Formel III, bevorzugt mindestens zwei der vorgenannten Verbindungen als Premonomere zur Gewinnung der biobasierten Monomere nach Formel I und/oder Formel II verwendet werden.

Ferner wird der vorbeschriebene biobasierte Polyester insbesondere durch eine Polymerisation, Copolymerisation, Emulsionspolymerisation, Festphasen- und/oder Schmelzphasenpolykondensation, Kondensation oder Umesterung, vorzugsweise durch Umesterung des biobasierten Monomers nach Formel I, und einer biobasierten hydroxyfunktionellen Verbindung wie Diol, Polyol oder Monool wie Aminoalkohol hergestellt.

Der Polyester ist insbesondere ein Polymer mit einem Molekulargewicht von 1.000 g/mol bis 100.000 g/mol, vorzugsweise von 5.000 g/mol bis 100.000 g/mol, von 20.000 bis 500.000 g/mol und von 100.000 bis 1.000.000 g/mol, weiter bevorzugt von 1.000 bis 50.000 g/mol.

Der biobasierte Polyester kann bereitgestellt werden durch eine Umsetzung des biobasierten Monomers nach Formel I und einem Diol, um einen Polyester durch Polykondensation zu erhalten, wobei das Diol vorzugsweise ein alpha-, omega-Diol mit 1 bis 100 C-Atomen, Dihydroxycyclohexandiol, Dihydroxyaryl, besonders bevorzugt ein 1,2-Diol, 1,3-Propandiol, 1,4-Butandiol, 1,5-Pentandiol, 1,6-Hexandiol, eine Fruchtsäure, ein Saccharid, ein Disaccharid, ein Monosaccharid, eine Polyhydroxy-Verbindung wie ein Gluconat ist. Bevorzugt ist das Diol ein biobasiertes 1,2-Diol.

Erfindungsgemäß kann ein biobasierter Polyester durch Polykondensation, die einer Umesterung entsprechen kann, gewonnen werden, indem ein oder mehrere biobasierte Monomeren nach Formel II, bevorzugt ein oder mehrere Derivate der Furan-2,5-dicarbonsäure wie Ester oder Anhydride mit einem Diol, insbesondere einem Glykol, umgesetzt werden. Das Glykol ist vorzugsweise ein Ethylenglykol, das im Überschuss mit den Monomeren nach Formel I umgesetzt wird. Bevorzugt ist das Ethylenglykol biobasiert.

Ein weiterer Gegenstand ist ein biobasiertes Prepolymer umfassend einen Ester der Furan-2,5-dicarbonsäure umfassend Mono- und Diester der Furan-2,5-dicarbonäsure und einem Diol. Bevorzugt ist auch ein biobasierter Polyester aus Monomeren der Formel I und/oder II wie der Furan-2,5-dicarbonsäure, einem Anhydrid, ein Monoester und/oder ein Diester der Furan-2,5-dicarbonsäure und insbesondere ist das zweite biobasierte Monomer Ethylenglykol.

In einer besonderen Ausführungsform umfasst der biobasierte Polyester einen Polyester basierend auf einer Furan-2,5-dicarbonbsäure oder eines ihrer Esterderivate nach Formel V 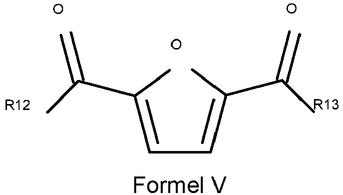 worin R12 und R13 jeweils unabhängig voneinander ein -OR14 enthalten, worin R14 jeweils unabhängig eine lineare, verzweigte und/oder cyclische unsubstituierte oder substituierte Kohlenwasserstoff-Gruppe mit 1 bis 20 C-Atomen, die optional O, N oder S-Atome enthält, umfasst.

Vorzugsweise ist der Polyester ein Polyethylenfuranoat (PEF) nach Formel IV, 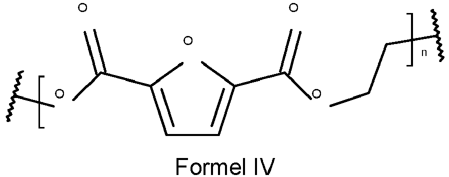 worin n größer 2 ist. Insbesondere sind Ausführungsformen, in denen n größer gleich 10 bis 500, 100 bis 1.000, 500 bis 5.000, bevorzugt 5.000 bis 10.000 ist.

Entsprechend der Erfindung kann ebenfalls verwendet werden ein biobasierter Polyester, welcher ein Polyethylenfuranoat nach Formel IV ist. Der Vorteil von Polyethylenfuranoat ist, dass es nicht nur aufgrund der Verwendung der global zur Verfügung stehenden Biomasse kostengünstiger als PET hergestellt werden kann, sondern, dass es unter anderem bessere Barriere- und thermische Eigenschaften als PET hat. Ein weiterer Vorteil der vorliegenden Erfindung ist die Bioabbaubarkeit der biobasierten Polyester. Insbesondere durch eine jeweils aerobe und/oder anaerobe Degradation durch Mikroorganismen, isolierte Enzyme, Enzymmischung oder Umwelteinflüsse vermittelte Degradation. Bevorzugt ist ein Polyester, welcher zu 60 %, zu 80 %, besonders bevorzugt zu 100 % bioabbaubar ist. Bevorzugt ist eine Degradation, welche die Anforderungen an die Bioabbaubarkeit gemäß der Europäischen Norm EN 13432 / EN 14995 erfüllt.

Der biobasierte Polyester, ist zur Herstellung von biobasierten Flächenelementen und/oder Faserstrukturen geeignet. Bevorzugt ist ein biobasierter Polyester umfassend flexible und/oder elastische oder unflexible und/oder unelastische Flächenelemente und/oder Faserstrukturen. Bevorzugt wird Flexibilität und Elastizität im Sinne von geringer Steifigkeit verstanden. Die Flächenelemente werden ausgewählt aus Flächenelementen umfassend gesponnene, gewebte und/oder geschmolzene Flächenelemente wie Vliese, Folien, Gewebe, Gittergewebe insbesondere Fliegengitter, Netze, Textilien und textile Bänder. Insbesondere sind solche biobasierte Flächenelemente bevorzugt, umfassend einen Polyester nach Formel IV besonders bevorzugt solche umfassend Polyethylenfuranoat. In einer besonderen Ausgestaltung ist jede der vorgenannten Flächenelementen und Faserstrukturen gemäß der Europäischen Norm EN 13432 / EN 14995 bioabbaubar.

Der biobasierte Polyester ist erhältlich nach einem Verfahren, umfassend die Schritte
1. Umsetzen eines biobasierten Monomers nach Formel I 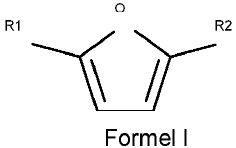 worin
   - R1 eine Carboxy-Gruppe ist und als Substituent eine lineare, verzweigte und/oder cyclische unsubstituierte oder substituierte Kohlenwasserstoff-Gruppe mit 1 bis 20 C-Atomen enthält, die optional O, N oder S-Atome enthält, oder eine Carbonsäure-Gruppe oder ein Anhydrid ist, vorzugsweise kann die Kohlenwasserstoff-Gruppe ein Kohlenhydrat umfassen, und unabhängig
   - R2 eine Carboxy-Gruppe ist und als Substituent eine lineare, verzweigte und/oder cyclische unsubstituierte oder substituierte Kohlenwasserstoff-Gruppe mit 1 bis 20 C-Atomen umfasst, oder eine Carbonsäure-Gruppe oder ein Anhydrid.R2 kann vorzugsweise eine Kohlenhydrat-Gruppe umfassen.
2. Durchführen einer Polykondensation zwischen dem biobasierten Monomer nach Formel I und dem zweiten biobasierten Monomer, der hydroxyfunktionellen Verbindung, wobei das zweite biobasierte Monomer ein Polyol ist.

Optional erfolgt die Polykondensation in Gegenwart eines Kondensationskatalysators, wobei ein biobasierter Polyester gewonnen wird.

Bevorzugte Katalysatoren umfassen Alkalimetalle sowie Ca, Mg, Na, K, Zr, Zn, Pb, insbesondere Pb(II), Ti und Sn basierte Katalysatoren. Insbesondere als Zinn(IV) basierte Katalysatoren sind bevorzugt Organozinn(IV) basierte Katalysatoren, besonders bevorzugt Alkylzinn(IV)-Salze umfassend Monoalkylzinn(IV)-Salze, Dialkyl- und Trialkylzinn(IV)-Salze, Zinn(II)octoat, sowie Mischungen dieser, Titanium(IV)alkoxide oder Titanium(IV)chelate, Zirkonium(IV)chelate oder Zirkonium(IV)-Salze (zum Beispiel Alkoxide), Hafnium(IV)chelate oder Hafnium(IV)-Salze (zum Beispiel Alkoxide). Besonders bevorzugte Zinn(IV) basierte Katalysatoren sind Butylzinn(IV)tris(octoat), Dibutylzinn(IV)di(octoat), Dibutylzinn(IV)diacetat, Dibutylzinn(IV)laureat, Bis(dibutylchlorozinn(IV))oxid, Dibutylzinndichlorid, Tributylzinn(IV)benzoat und Dibutylzinnoxid.

Besonders bevorzugt ist die Polykondensation eine Veresterung oder eine Umesterung von Furandicarbonsäure mit einem flüchtigen Alkohol wie Ethanol, Methanol und wird mit Ethylenglykol oder einem Diol oder Triol durchgeführt. Vorzugsweise wird die Polykondensation im Emulsionspolymerisationsverfahren durchgeführt.

Als Kondensationskatalysatoren kommen vorzugsweise für eine Emulsionspolymerisation Phasentransferkatalysatoren in Betracht, Alternativ können auch Katalysatoren eingesetzt werden, die zusammen mit gegebenenfalls freigesetztem Alkohol abdestilliert werden können und daher in Alkoholen löslich sind. Vorzugsweise werden metallfreie Katalysatoren eingesetzt, um die Bildung gefärbter Nebenprodukte zu vermeiden.

Gemäß einer weiteren bevorzugten Verfahrensvariante wird als biobasiertes Monomer der Formel I eine Furan-2,5-dicarbonsäure (FDCA) oder ein Derivat dieser, die durch Dehydratisierung von Zuckern umfassend Pentosen und Hexosen wie Fructose und insbesondere anschließender Oxidation über die Bildung von Prepolymeren der Formel III wie Hydroxyfurfural gewonnen wird, in dem Verfahren eingesetzt.

Bevorzugt ist ein Verfahren, in dem die hydroxyfunktionelle Verbindung ein biobasiertes Ethylenglykol ist, das insbesondere gewonnen wird durch
1. Dehydratisierung von Bio-Ethanol erhalten aus der Fermentation von Kohlenhydraten wie Stärke und/oder Zucker zu Ethen,
2. Durchführen einer Oxidation zu Ethylenoxid, und
3. Ringöffnung in Gegenwart von Wasser und Ethanol und Erhalt von Ethylenglykol, wobei das Ethanol biobasiert ist.

Ebenfalls beschrieben ist ein Verfahren zur Herstellung eines biobasierten Polyesters sowie der Polyester erhältlich nach diesem Verfahren, indem
- die Gewinnung der Premonomere nach Formel III aus Biomasse enthaltend Kohlenhydrate eine Dehydratation der Biomasse umfasst, wobei in Formel III 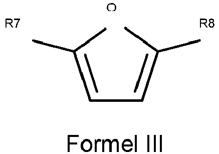 jeweils unabhängig voneinander
   R7 ausgewählt wird aus der Gruppe, welche eine lineare, verzweigte und/oder cyclische unsubstituierte oder substituierte Kohlenwasserstoff-Gruppe mit 1 bis 20 C-Atomen, die optional O, N oder S-Atome enthält, -CO-R9, -(CH₂)ₓ-O-R9, -O-R9 und Wasserstoff umfasst, und R8 ausgewählt wird aus der Gruppe, welche eine lineare, verzweigte und/oder cyclische unsubstituierte oder substituierte Kohlenwasserstoff-Gruppe mit 1 bis 20 C-Atomen, die optional O, N oder S-Atome enthält, -CO-R9, - (CH₂)ₓ-O-R9, -O-R9 und Wasserstoff umfasst, wobei R9 jeweils unabhängig voneinander ausgewählt wird aus der Gruppe, welche eine lineare, verzweigte und/oder cyclische unsubstituierte oder substituierte Kohlenwasserstoff-Gruppe mit 1 bis 20 C-Atomen, die optional O, N oder S-Atome enthält, und Wasserstoff umfasst und x jeweils unabhängig voneinander eine ganze Zahl zwischen 1 und 10 ist, vorzugsweise größer gleich 1 bis 8, besonders bevorzugt größer gleich 1 bis 6 ist.
- Die zuvor gewonnenen Premonomere nach Formel III oder Mischungen enthaltend mindestens zwei der Premonomere nach Formel III werden mit einem Oxidationsmittel, insbesondere molekularem Sauerstoff oder mindestens einem Peroxid, unter sauren Bedingungen, insbesondere einer Lösung oder Dispersion, bevorzugt enthaltend organische Säuren, besonders bevorzugt Säuren mit einem pKa kleiner gleich 4 umfassend Acetylsäure, Ameisensäure und/oder Alkylcarbonsäure sowie Derivate davon, optional in Anwesenheit eines Katalysators oder einer Mischung von Katalysatoren, insbesondere eines Metallkatalysators oder einer Metallkatalysatormischung umfassend Alkalimetalle, Salze von Ca, Mg, Na, K, Zr, Zn, Pb, Ti und Sn, insbesondere Pb(II), Sn(IV), Sn(II), Co, Ni, Mn, Br, Zr und/oder Ce sowie Ziegler-Natta-Katalysatoren umfassend Übergangsmetalle in Kontakt gebracht, alle wie vorstehend definiert,
- Anschließend erfolgt die Umsetzung der in Kontakt gebrachten Verbindungen zu mindestens einem biobasierten Monomer nach Formel I und Wasser,
- Dann wird das zuvor entstandene Wasser, insbesondere durch Destillation, Wasserdampfdestillation, Vaporisation, im Vakuum und/oder Extraktion oder mittels eines Dehydratationsmittels umfassend Verbindungen mit wasserspaltenden Eigenschaften wie konzentrierte Schwefelsäure, Phosphorsäure und wasserfreies Zinkchlorid, entfernt und biobasierte Monomere nach Formel I gewonnen, 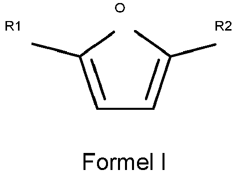 worin jeweils unabhängig voneinander R1 eine Carboxy-Gruppe ist und als Substituent eine lineare, verzweigte und/oder cyclische unsubstituierte oder substituierte Kohlenwasserstoff-Gruppe mit 1 bis 20 C-Atomen enthält, die optional O, N oder S-Atome enthält, oder eine Carbonsäure-Gruppe ist oder ein Anhydrid ist. Insbesondere kann die Kohlenwasserstoff-Gruppe eine Alkyl-, Alkylaryl-, Alkylen- oder Aryl-Gruppe oder Derivate davon oder ein Polyhydroxykohlenwasserstoff wie Zucker sein, wobei die Kohlenwasserstoff-Gruppe optional O, N oder S-Atome enthält.
- In einem nächsten Schritt werden die zuvor gewonnenen Monomere mit einer hydroxyfunktionellen Verbindung, insbesondere Monool und/oder Polyol, besonders bevorzugt mindestens einem Diol und Polyol, optional in Gegenwart eines Katalysators, vorzugsweise in einer Lösung oder Dispersion mit einem Katalysator oder mit einer Katalysatormischung in Kontakt gebracht, folgend von
- einer Reaktion der in Kontakt gebrachten Monomere und der hydroxyfunktionellen Verbindungen zu einem Polyester, insbesondere durch Emulsionspolymerisation, Veresterung, Schmelzphasenpolykondensation, Festphasenpolykondensation und/oder Kondensation. Bevorzugt ist die Umsetzung zum biobasierten Polyester eine Polykondensation in Form einer Veresterung oder Umesterung.

Die Gewinnung der Premonomere kann insbesondere durch aeroben und/oder anaeroben mikrobiellen und/oder enzymatischen Abbau von Biomasse erfolgen, insbesondere durch isolierte Enzyme oder Enzymmischung. Bevorzugt wird solche Biomasse verwendet, die ein hohes Energiepotential aufweist, ausgewählt aus pflanzlicher Herkunft wie Holz, Naturfasern insbesondere Cellulose und ihre Derivate, Pflanzenöle sowie Zucker und Stärke, insbesondere biogene Abfallprodukte wie landwirtschaftliche Abfälle und Lebensmittelabfälle enthaltend Kohlenhydrate. Beispiel für landwirtschaftlichen Abfall ist Bagasse (umfassend Haferschalen, Maiskolbenrückstände), Holzabfälle und Stroh enthaltend Cellulose, Xylan und Lignin.

Bevorzugt ist ein Verfahren, indem in Schritt 1 die Gewinnung der Premonomere nach Formel III aus Biomasse enthaltend Kohlenhydrate erfolgt, worin das Premonomer ein Furanderivat ist, ausgewählt aus einem Alkoxymethylfuran und/oder Dialkoxymethylfuran, bevorzugt ein 2,5-Bis(alkoxymethyl)furan, einem Furfural (Furanaldehyd, R-(C=O)H) ausgewählt aus der Gruppe umfassend Alkoxymetyhlfurural, 5-Hydroxymethylfurfural (HMF), 2-Ethoxymethylfurfural (EMF) und 5-Ethoxymethylfurfural (EMF) oder Mischungen enthaltend mindestens zwei Premonomere nach Formel III, bevorzugt enthaltend mindestens zwei der genannten Verbindungen und in Schritt 3 sowie in Schritt 4 die biobasierten Monomere nach Formel I gebildet werden, 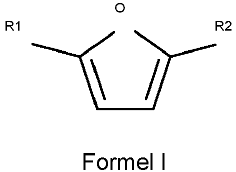 worin jeweils R1 eine Carboxy-Gruppe ist und als Substituent eine lineare, verzweigte und/oder cyclische unsubstituierte oder substituierte Kohlenwasserstoff-Gruppe mit 1 bis 20 C-Atomen enthält. Insbesondere kann die Kohlenwasserstoff-Gruppe eine Alkyl-, Alkylaryl-, Alkylen- oder Aryl-Gruppe oder Derivate davon oder ein Polyhydroxykohlenwasserstoff wie Zucker sein, wobei die Kohlenwasserstoff-Gruppe optional O, N oder S-Atome enthält, und R2 ist eine Carboxy-Gruppe und als Substituent eine lineare, verzweigte und/oder cyclische unsubstituierte oder substituierte Kohlenwasserstoff-Gruppe mit 1 bis 20 C-Atomen umfasst.

Bevorzugt werden biobasierte Monomere nach Formel II gebildet, 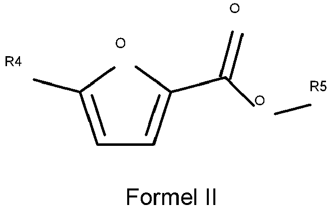 worin R4 eine Carboxy-Gruppe ist und als Substituent eine lineare, verzweigte und/oder cyclische unsubstituierte oder subsituierte Kohlenwasserstoff-Gruppe mit 1 bis 20 C-Atomen. Insbesondere kann die Kohlenwasserstoff-Gruppe eine Alkyl-, Alkylaryl-, Alkylen- oder Aryl-Gruppe oder Derivate davon oder ein Polyhydroxykohlenwasserstoff wie Zucker sein, wobei die Kohlenwasserstoff-Gruppe optional O, N oder S-Atome enthält. Vorzugsweise ist R4 ein Carboxyester, worin der Ester aus Dihydroxyverbindungen abgeleitet ist, und R5 ausgewählt wird aus der Gruppe, welche umfasst eine lineare, verzweigte und/oder cyclische unsubstituierte oder substituierte Kohlenwasserstoff-Gruppe mit 1 bis 20 C-Atomen. Insbesondere kann die Kohlenwasserstoff-Gruppe eine Alkyl-, Alkylaryl-, Alkylen- oder Aryl-Gruppe oder Derivate davon oder ein Polyhydroxykohlenwasserstoff, wie Zucker sein, wobei die Kohlenwasserstoff-Gruppe optional O, N oder S-Atome enthält.

Bevorzugt werden nach dem beschriebenen Verfahren biobasierte Polyester, umfassend eine Umsetzung von biobasierter Furan-2,5-dicarbonäsure oder ihre Esterderivate und einem biobasierten Diol umfassend Glykol gewonnen. Vorzugsweise ist es ein Polyester nach Formel IV, besonders bevorzugt ist es das Polyethylenfuranoat gewonnen aus einer Umsetzung von Furan-2,5-dicarbonäsure oder eines ihrer Esterderivate und einem Ethylenglykol.

Weitere alternative Furanderivate, welche als Ausgangsmaterialien geeignet sind, können der EP 0 230 250 B1, EP 0 561 928 B1 und US 2012/283452 A entnommen werden.

Weitere Verfahren und Ausführungsbeispiele des Verfahrens sind in der US 2011/092720 A, US 2009/306415 A sowie US 2012/271060 beschrieben, welche für die Herstellung des biobasierten Polyesters, insbesondere von Trägermaterialen daraus geeignet sind.

Ebenfalls beschrieben ist ein Erzeugnis umfassend das vorbeschriebene biobasierte Polyester, bevorzugt ein Polyester nach Formel IV, besonders bevorzugt Polyethylenfuranoat (PEF), in Form von Flächenelementen umfassend gesponnene, gewebte und/oder geschmolzene Flächenelemente wie Vliese, Folien, Gewebe, Gittergewebe insbesondere Fliegengitter, Netze, Textilien und textile Bänder.

Ebenso beschrieben sind Erzeugnisse umfassend Klebebänder, insbesondere ein Trägermaterial für ein- und zweiseitige Klebebänder, bevorzugt ein Trägermaterial für Klebebänder zur Umhüllung von langgestrecktem Gut umfassend elektrische Leitungen, insbesondere Kabel, Kabelsätze und Drähte, bevorzugt solcher Kabel und Kabelätze in Automobilinnenanwendungen. Weitere Erzeugnisse umfassen Deckmaterialien, Transfermaterialien, Transferfolien, Releaseliner oder Trägermaterial für Kabelwickelbänder.

Der voran beschriebene biobasierte Polyester, vorzugsweise PEF ist zur Herstellung von insbesondere flexiblem und/oder elastischen oder unflexiblen und/oder unelastischen biobasierten Flächenelementen umfassend gesponnene, gewebte oder geschmolzene Flächenelemente wie Vliese, Folien, Releaselinern, Gewebe, Gittergewebe insbesondere Fliegengitter, Netze, Textilien und textilen Bändern geeignet.

Die biobasierten Flächenelemente und/oder Faserstrukturen sind zur Herstellung von Folien und/oder Trägermaterialien geeignet, insbesondere von Folien und/oder Trägermaterialien zur Herstellung von Klebebändern, insbesondere zur Herstellung von Trägermaterialien für Klebebänder gemäß LV-312 zum Schutz vor Abrieb, zur Geräuschdämpfung, Isolierung, Ummantelung, Bündelung, Positionierung und Fixierung von langgestrecktem Gut, insbesondere elektrische Leitungen umfassend Kabel und Drähte gemäß LV-312.

Trägermaterialien im Sinne der Erfindung sind Materialien, welche für den Auftrag einer Klebemasse geeignet sind. Solche umfassen nachfolgend beschriebene flächige Träger.

Als Trägermaterial für ein Klebeband können der biobasierte Polyester, vorzugsweise das PEF, in Form von allen bekannten textilen Trägern wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese bereitgestellt werden, wobei unter "Vlies" zumindest textile Flächengebilde gemäß EN 29092 (1988) sowie Nähwirkvliese und ähnliche Systeme zu verstehen sind. Ebenfalls kann der biobasierte Polyester, vorzugsweise das PEF, als Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurch genadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inertem Gestein wie zum Beispiel Sand, Kies oder dergleichen vorhanden. Die durch die Partikelschicht hindurch genadelten Haltefasern halten die Deckschicht und die Unterlagsschicht in einem Abstand voneinander und sie sind mit der Deckschicht und der Unterlagsschicht verbunden.

Der biobasierte Polyester, vorzugsweise das PEF, können in Form von Vliesstoffen, besonders als verfestigte Stapelfaservliese, jedoch auch Filament-, Meltblown- sowie Spinnvliese verarbeitet werden, die meist zusätzlich zu verfestigen sind. Mögliche Verfestigungsmethoden können dem Stand der Technik entnommen werden.

Besonders vorteilhaft hat sich der Polyester, vorzugsweise das PEF, als Vliese erwiesen, die insbesondere durch ein Übernähen mit separaten Fäden oder durch ein Vermaschen verfestigt sind. Derartige verfestigte Vliese können beispielsweise auf Nähwirkmaschinen des Typs "Malimo" der Firma Karl Mayer, hergestellt werden. Ein Malivlies ist dadurch gekennzeichnet, dass ein Querfaservlies durch die Bildung von Maschen aus Fasern des Vlieses verfestigt wird. Als Träger aus Polyester, vorzugsweise PEF, kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Schließlich ist der Polyester, vorzugsweise PEF, zur Herstellung von Nähvliesen als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden, bevorzugt textile Fäden umfassend den Polyester, vorzugsweise PEF.

Besonders geeignet sind auch Nadelvliese umfassend den Polyester, vorzugsweise PEF. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin ist der Polyester, vorzugsweise PEF, besonders zur Herstellung von Stapelfaservlies geeignet, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe gemäß dem Stand der Technik von Bindemittel in fester, flüssiger, geschäumter oder pastöser Form erfolgen kann.

Vorteilhaft und zumindest bereichsweise kann der Träger umfassend den Polyester, vorzugsweise PEF, eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der erfindungsgemäße polymere Träger zur Verdichtung in einem Walzwerk gemäß dem Stand der Technik kalandert werden. Des Weiteren ist der Polyester, vorzugsweise PEF, zur Herstellung von Garnen ebenfalls geeignet.

Bei Geweben oder Gelegen umfassend den Polyester, vorzugsweise PEF, können darüber hinaus einzelne Fäden aus einem Mischgarn hergestellt werden, also synthetische und natürliche Bestandteile aufweisen. Bevorzugt sind Kettfäden und Schussfäden jedoch jeweils sortenrein erfindungsgemäß aus dem Polyester, vorzugsweise PEF, hergestellt.

Ist eine Schwerentflammbarkeit des beschriebenen Klebebands erwünscht, lässt sich diese erzielen, indem dem erfindungsgemäßen Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die jeweils für sich beschriebenen Formen der biobasierten Flächenelemente und Faserstrukturen können bei Bedarf kombiniert werden. Zum Beispiel ohne eine Einschränkung vorzunehmen, kann es erforderlich sein ein Flächenelement, insbesondere ein Gewebe durch eine Faserstruktur, insbesondere Garne oder Filamente zu verstärken.

Gegenstand der vorliegenden Erfindung ist die Bereitstellung eines Klebebandes zum Ummanteln von langgestrecktem Gut, insbesondere zum Schutz von Substraten vor Abrieb, Schmutz, Feuchtigkeit und/oder Hitzeeinwirkung, zur Geräuschdämpfung, Isolierung, Ummantelung, Bündelung, Ummantelung von Kabeln, Bündelung von Kabeln, Positionierung und Fixierung von langgestrecktem Gut, insbesondere gemäß der Anforderungen der Klasse A, B, C, D und/oder E, umfassend a) ein biobasiertes Trägermaterial im Sinne der vorliegenden Erfindung, b) auf mindestens einer der beiden Oberflächen des biobasierten Trägermaterials eine aufgebrachte Klebemasse, insbesondere Haftklebemasse und Schmelzklebemasse, und optional c) mindestens ein Deckmaterial, insbesondere zur Abdeckung der ein- und/oder beidseitig aufgetragenen Klebemasse bis zum anwendungsgemäßen Gebrauch und/oder Transfermaterial, insbesondere für eine leichtere Handhabung des Klebebandes unter anderem für ein leichteres Auf- und Abrollen des Klebebandes. Bevorzugt ist ein Deck- und/oder Transfermaterial, welches den Polyester, vorzugsweise PEF, enthält.

Das Klebeband kann ein oder mehrere Schichten aus Folien oder Schaumträgern enthalten. Das Klebeband kann darüber hinaus ein oder mehrere funktionelle Schichten wie Deckmaterialen und Transferschichten aus heißschmelzfähigem Material oder anderen funktionellen Schichten enthalten.

In einer bevorzugten Ausführungsform ist das Transfermaterial die Kehrseite des Deckmaterials, dadurch gekennzeichnet, dass im aufgerollten Zustand des Klebebandes (Rolle) das Deckmaterial und Transfermaterial übereinander angeordnet sind und aneinanderhaften und gleichzeitig beim Abrollen des Klebebandes ein Ablösen des Deckmaterials und Transfermaterials voneinander ermöglicht wird, ohne dass die dazwischen befindliche Klebemasse insbesondere bei einem beidseitig klebenden Klebeband freigelegt wird. In einer vorteilhaften Ausführungsform ist das Deckmaterial oder Transfermaterial die Kehrseite des Trägers gemäß der vorliegenden Erfindung, auf welchem die Klebemasse aufgetragen wird.

Als Beispiele für Haftklebemassen, aber ohne eine Einschränkung vornehmen zu wollen, seien als vorteilhaft im Sinne dieser Erfindung die folgenden genannt: Acrylat-, Silikon-, Naturkautschuk-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerblöcke) sowie weitere, dem Fachmann geläufige Haftklebemassen, für die insbesondere silikonhaltige Trennbeschichtungen verwendet werden können. Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschreiben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen anwendbar. Bevorzugt werden Klebemassen auf Basis von biobasierten Harzen verwendet, um ein vollständig biobasiertes Klebeband bei gleicher Klebkraft zu erzielen. Bevorzugt wird eine biobasierte Klebemasse verwendet, welche bioabbaubar ist. Vorzugsweise ist die Klebemasse zu mindestens 30 Gew.-% bioabbaubar, besonders bevorzugt zu mindestens 40 Gew.-% bioabbaubar.

Es kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine Acrylatschmelzhaftklebemasse, verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.

Das Auftragsgewicht bewegt sich vorzugsweise im Bereich zwischen 15 bis 200 g/m², weiter vorzugsweise 30 bis 120 g/m² (entspricht ungefähr einer Dicke von 15 bis 200 µm, weiter vorzugsweise 30 bis 120 µm).

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.

Der K-Wert (nach FIKENTSCHER) ist ein Maß für die durchschnittliche Molekülgröße hochpolymerer Stoffe. Die Bestimmung der Viskosität von Polymeren durch ein Kapillarviskosimeter erfolgt nach DIN EN ISO 1628-1:2009.

Zur Messung werden einprozentige (1 g/100 ml) toluolische Polymerlösungen bei 25 °C hergestellt und unter Verwendung des entsprechenden DIN-Ubbelohde-Viskosimeters nach ISO 3105:1994, Tabelle B.9 vermessen.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C1 dargelegt. Diesen auf diesem Wege hergestellten Acrylatmassen wird in einem Zwischenschritt das Lösungsmittel vollständig entzogen.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth)¬acrylsäure und deren Estern mit 1 bis 25 C-Atomen, Malein-, Fumar- und/oder Itaconsäure und/oder deren Estern, substi¬tuierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% beitragen.

Eine Klebemasse, die sich als besonders geeignet zeigt, ist eine Acrylatschmelzhaftklebemasse, wie sie unter der Bezeichnung acResin, insbesondere acResin A 260 UV, von der BASF geführt wird. Diese Klebemasse mit niedrigem K-Wert erhält ihre anwendungsgerechten Eigenschaften durch eine abschließende strahlenchemisch ausgelöste Vernetzung.

Weitere hervorragend geeignete Klebemassen sind in den Dokumenten DE 10 2011 075 152 A1, DE 10 2011 075 156 A1, DE 10 2011 075 159 A1 und DE 10 2011 075 160 A1 beschrieben.

Bevorzugt ist die Klebemasse vollflächig auf dem Träger aufgetragen.

Die Klebemasse kann in Längsrichtung des Klebebands in Form eines Streifens aufgebracht sein, der eine geringere Breite aufweist als das Trägermaterial des Klebebands.

Der beschichtete Streifen hat in einer vorteilhaften Ausführungsform eine Breite von 10 bis 80 % der Breite des Trägermaterials. Besonders vorzugsweise erfolgt der Einsatz von Streifen mit einer Beschichtung von 20 bis 50 % der Breite des Trägermaterials.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Weiterhin können zwei Klebstoffstreifen vorgesehen sein, und zwar ein Klebstoffstreifen auf der Oberseite des Trägermaterials und ein Klebstoffstreifen auf der Unterseite des Trägermaterials, wobei die beiden Klebstoffstreifen vorzugsweise an den sich gegenüberliegenden Längskanten angeordnet sind. Gemäß einer Variante sind die beiden Klebstoffstreifen an ein- und derselben Längskante angeordnet. Vorzugsweise schließen der oder die Klebestoffstreifen jeweils bündig mit der oder den Längskanten des Trägermaterials ab.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken.

Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.

Die angegebenen Prozentzahlen beziehen sich auf die Breite der Streifen der Eindeckung in Bezug auf die Breite des Trägers.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.

Wird das Klebeband zur Ummantelung eines Kabelbaums eingesetzt, indem das Klebeband in einer schraubenlinienförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.

Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.

Für das sichere und wirtschaftliche Aufbringen des Klebebands in besagter schraubenlinienförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Die Herstellung und Verarbeitung der Klebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Klebemassen können dann mit den allgemein bekannten Verfahren auf den Träger gebracht werden. Bei Verarbeitung aus der Schmelze können dies Auftragsverfahren über eine Düse oder einen Kalander sein.

Bei Verfahren aus der Lösung sind Beschichtungen mit Rakeln, Messern oder Düsen bekannt, um nur einige wenige zu nennen.

Möglich ist auch eine Transferierung der Klebemasse von einem anti-adhäsiven Trägertuch oder Releaseliner auf den Trägerverbund.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv/dehäsiv wirkende Stoffe ausgerüstet sein. Gegebenenfalls befindet sich unter dem Rückseitenlack oder alternativ dazu einen Schaumbeschichtung auf der Rückseite des Klebebands.

Das Klebeband kann in festen Längen wie zum Beispiel als Meterware oder aber als Endlosware auf Rollen (archimedische Spirale) zur Verfügung gestellt werden. Für die Verwendung ist im letzteren Fall dann ein variables Ablängen durch Messer, Scheren oder Dispenser und ähnlichem möglich oder eine manuelle Verarbeitbarkeit ohne Hilfsmittel.

Des Weiteren kann das Klebeband im Wesentlichen rechtwinklig zur Laufrichtung ein oder mehrere Schwächungslinien aufweisen, so dass das Klebeband leichter handeinreißbar ist.

Um ein besonders einfaches Arbeiten für den Anwender zu ermöglichen, sind die Schwächungslinien rechtwinklig zur Laufrichtung des Klebebands ausgerichtet und/oder in regelmäßigen Abständen angeordnet.

Besonders einfach lässt das Klebeband durchtrennen, wenn die Schwächungslinien in Form von Perforationen ausgestaltet sind.

Es lassen sich auf diese Weise Kanten zwischen den einzelnen Abschnitten erzielen, die sehr fusselfrei sind, also ein unerwünschtes Ausfransen vermieden wird. Besonders vorteilhaft lassen sich die Schwächungslinien diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.

Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so dass ein störendes Ausfasern weitestgehend vermieden wird und man randscharfe Schneidkanten erhält. Letztere Verfahren eignen sich auch, um spezielle Schneidkantengeometrien zu erzielen, beispielsweise konkav oder konvex ausgeformte Schneidkanten.

Die Höhe der Stachel beziehungsweise Messer auf den Stanzwalzen beträgt bevorzugt 150 % der Dicke des Klebebands.

Das Loch-Steg-Verhältnis bei der Perforierung, also wie viele Millimeter halten das Material zusammen ("Brücke"), wie viele Millimeter sind durchtrennt, bestimmt, wie leicht insbesondere die Fasern des Trägermaterials einzureißen sind. Des Weiteren beeinflusst dies Verhältnis letztlich auch, wie fusselfrei die Abrisskante zu erhalten ist.

Vorzugsweise beträgt die Stegbreite ungefähr 2 mm und die Schnittbreite zwischen den Stegen ungefähr 10 mm, das heißt, es wechseln sich 2 mm breite Stege mit 10 mm Einschnitten ab. Das Loch-Steg-Verhältnis beträgt demgemäß vorzugsweise 2:10. Mit dieser Schwächung des Materials lässt sich eine ausreichend geringe Abreißkraft erzielen.

Hergestellt werden kann das Klebeband in einem Verfahren umfassend
(1) Vorlegen des Trägermaterials, insbesondere in Form eines Flächenelementes,
(2) Aufbringen der Klebemasse in Form einer Schicht auf mindestens eine der beiden Oberflächen des Trägermaterials und,
(3) optional Abdecken der Klebemasse mit einem Deckmaterial und/oder Transfermaterial.

Bevorzugt ist ein Verfahren, welches ferner das Aufrollen des erhaltenen ein- oder zweiseitig klebenden Klebebandes zu einer Rolle umfasst oder das Herstellen von Stanzlingen.

Das Verfahren zur Herstellung eines Klebebandes im Sinne der Erfindung umfasst optional
a) das Aufbringen der Klebemasse auf der zweiten Oberfläche des Trägermaterials,
b) Abdecken der Klebemasse mit einem Deckmaterial und/oder Transfermaterial und
c) Aufrollen des erhaltenen beidseitig klebenden Klebebandes zu einer Rolle.

Bevorzugt umfasst das Verfahren das Aufrollen des erhaltenen zweiseitig klebenden Klebebandes zu einer Rolle oder das Herstellen von Stanzlingen.

Das Klebeband kann in Form einer Rolle, also in Form einer archimedischen Spirale auf sich selbst aufgerollt, hergestellt werden.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken. Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes. Die angegebenen Prozentzahlen beziehen sich auf die Breite der Streifen der Eindeckung in Bezug auf die Breite des Trägers. Gemäß einer bevorzugten Ausführungsform der Erfindung ist genau ein Streifen der Eindeckung auf der Klebebeschichtung vorhanden. Daneben gibt es Ausführungsformen, bei denen mehr als ein Streifen der Eindeckung auf der Klebebeschichtung aufgebracht sind.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.

Wird das Klebeband zur Ummantelung eines Kabelbaums eingesetzt, indem das Klebeband in einer schraubenlinienförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt. Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht. Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Der Herstellprozess des erfindungsgemäßen Klebebandes erfolgt durch Beschichtung des Trägers mit der Klebemasse in einem oder mehreren nacheinander durchgeführten Arbeitsgängen. Im Falle von textilen PEF-Trägern kann das unbehandelte Textil direkt oder im Transferverfahren beschichtet werden. Alternativ kann das Textil mit einer Beschichtung vorbehandelt werden (mit beliebigem filmbildendem Stoff aus Lösung, Dispersion, Schmelze und/oder strahlenhärtend), um dann in einem nachgeschalteten Arbeitsschritt direkt oder im Transferverfahren mit der Haftklebemasse versehen zu werden.

Ebenfalls beschrieben ist ein langgestrecktes Gut, ummantelt mit einem erfindungsgemäßen Klebeband. Vorzugsweise handelt es sich bei dem langgestreckten Gut, umfassend elektrische Leitungen, um einen Kabelsatz oder Drähte.

Das erfindungsgemäß zu verwendende Klebeband kann in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.

Der Polyester, vorzugsweise PEF, kann in Ausführungsformen von Trägern und/oder Klebebändern, wie sie in der EP 1 312 097 A1 offenbart sind, verwendet werden. In der EP 1 300 452 A2, der DE 102 29 527 A1, WO 2006/108 871 A1 sowie EP 2 520 629 A werden weitere Ausführungsformen und Methoden zur Ummantelung dargestellt, für die der Polyester, vorzugsweise PEF, ebenfalls sehr gut geeignet ist.

Schließlich beschreiben die EP 1 315 781 A1 sowie die DE 103 29 994 A1 Ausführungsformen von Klebebändern, welche ebenfalls aus dem Polyester, vorzugsweise PEF, hergestellt werden können.

Weiter vorzugsweise zerstört das Klebeband bei Verklebung auf Kabeln mit PVC-Ummantelung und auf Kabeln mit Polyolefin-Ummantelung die selbigen nicht, wenn ein Verbund aus Kabeln und Klebeband gemäß der LV 312 bei Temperaturen über 100 °C und bis zu 3000 h gelagert und anschließend die Kabel um einen Dorn gebogen werden.

### Allgemeines Ausführungsbeispiel:

Herstellung Premonomere:

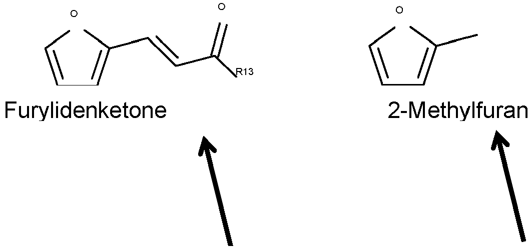

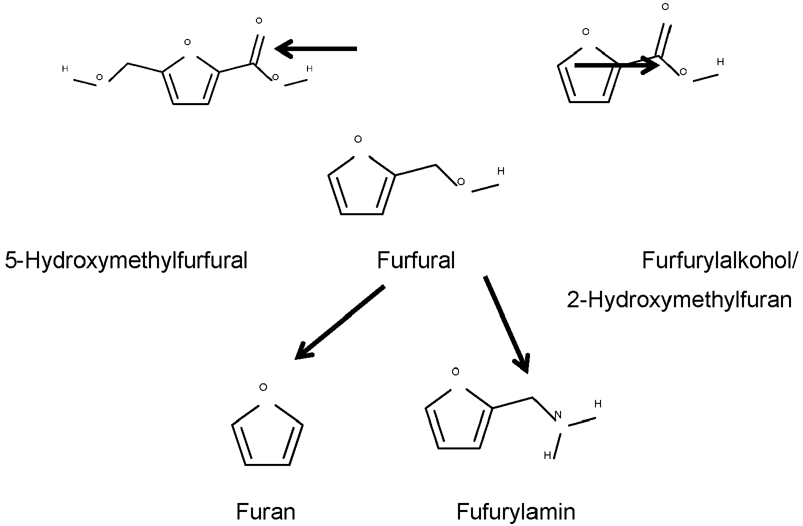

Beispiele zur Gewinnung von Furfural
- Nach Döbereiner (1831) durch Destillation von Kleie mit Schwefelsäure.
- Umsetzung von Hemicellulose mit veründeter Säure in Wasserdampf in die Pentosen (Monomer-bausteine der Xylose), anschließend Dedrydatation zu Furfural.

Verfahren zur Herstellung von PEF 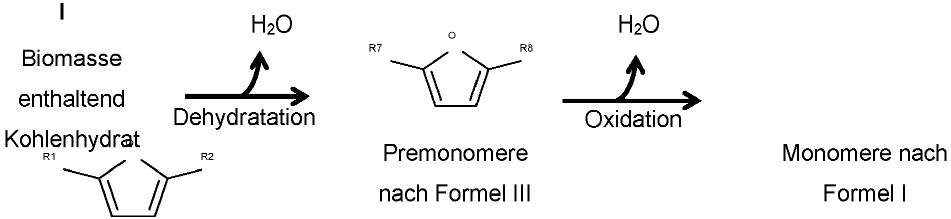 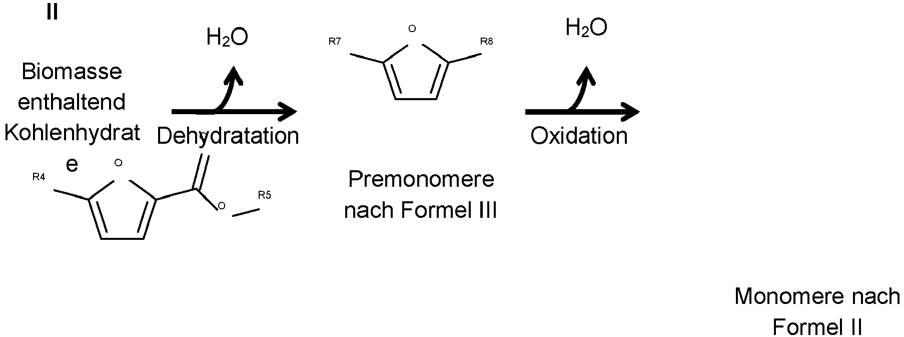 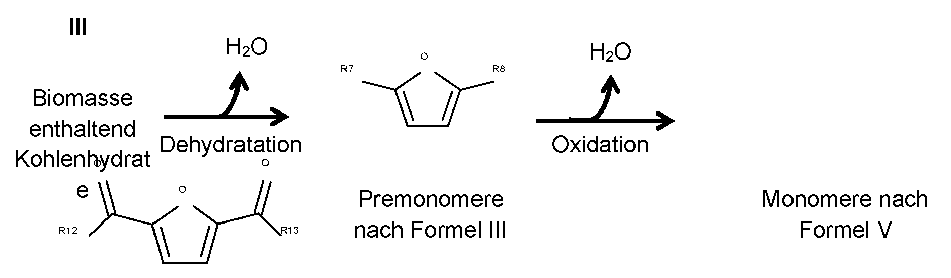 mit R12 und R13 jeweils unabhängig voneinander ein -OH oder ein Alkylether umfassend eine Methyl-, Ethyl-, Propyl-, Butyl, Pentyl- und Hexyl-Gruppe, bevorzugt ein Mono- oder Diethyl mit m = 1 als Ethylenglykol

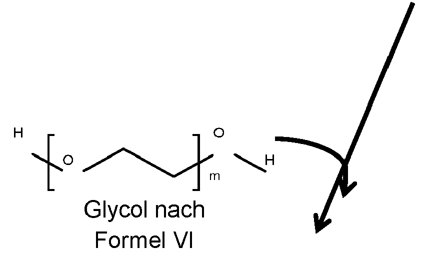

PEF mit n größer 2

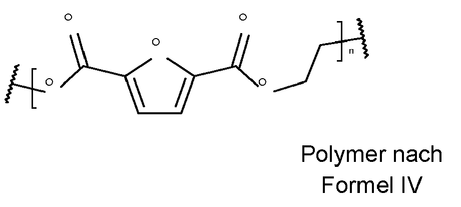

### Anteil nachwachsender Rohstoffe in den Polymeren

Der Anteil nachwachsender Rohstoffe ergibt sich aus der Auswahl und Menge der eingesetzten Edukte.

Zur Verifizierung auch unbekannter Proben lässt sich die Radiokarbonmethode nach ASTM D6866-04 einsetzen. Die Methode beruht auf der Messung des Isotopes ¹⁴C, das in der Natur (Biomasse) mit einer Häufigkeit von 10⁻¹⁰ % im Kohlenstoff vorkommt. Die Messung des Isotops ¹⁴C erfolgt mittels Flüssigszintillationsspektrometrie oder Massenspektroskopie. Der Bestimmung des Anteils an nachwachsenden Rohstoff liegt zugrunde, dass das Isotop ¹⁴C eine verhältnismäßig kurze Halbwertszeit des Zerfalls von 5 730 Jahren hat. Daher ist in Kohlenstoffproben, die älter als 60 000 Jahren sind, im Rahmen der Nachweisgrenze der Methoden kein Isotop ¹⁴C mehr nachweisbar. Der Kohlenstoff in den Erdöl basierenden Rohstoffen der Petrochemie ist mehrere Millionen Jahre und enthält kein nachweisbares ¹⁴C.

PEF wurde gemäß dem Beispiel 6 der EP 2 370 496 A1 hergestellt und zu Trägern verarbeitet. Die daraus hergestellten Träger wurden zu Klebebändern weiterverarbeitet. Nachteilig an den Bändern ist die starke Einfärbung des Polymers.

Im Folgenden soll die Erfindung anhand von Beispielen näher erläutert werden, ohne mit diesen die Erfindung in irgendeiner Weise beschränken zu wollen.

Die Messungen finden dabei nach folgenden Normen statt:
- Flächengewichte der Gewebe und der Klebmassebeschichtung nach DIN EN ISO 2286-1
- Garngewicht nach DIN 53830 T3
- Fadenzahl nach DIN EN 1049 Teil 2
- Klebkraft nach DIN EN 1939
- Dicke der Gewebe und Klebebänder nach DIN EN 1942

### Molekulargewicht

Die Bestimmung des mittleren insbesondere gewichtsmittleren Molekulargewichtes M_{W} und anderer mittlerer Molekulargewichte erfolgt mittels Gelpermeationschromatographie (GPC). Als Eluent wird THF mit 0,1 Vol.-% Trifluoressigsäure eingesetzt. Die Messung erfolgt bei 25 °C. Als Vorsäule wird PSS-SDV, 5 µm, 10³ Å, ID 8,0 mm x 50 mm verwendet. Zur Auftrennung werden die Säulen PSS-SDV, 5 µm, 10³ Å, 10⁵ Å und 10⁶ Å mit jeweils ID 8,0 mm x 300 mm eingesetzt. Die Probenkonzentration beträgt 4 g/l, die Durchflussmenge 1,0 ml pro Minute. Es wird gegen PMMA-Standards gemessen.
(µ = µm; 1 Å = 10⁻¹⁰ m).

### Gewebekonstruktionen

**Tabelle 1: Gewebekonstruktionen von Geweben verschiedener PEF-Gewebeklebebänder**

| | (I) | (II) | (III) | (IV) |
|---|---|---|---|---|
| Trägermaterial | PEF-Gewebe | PEF-Gewebe | PEF-Gewebe | PEF-Gewebe |
| Fadenzahl längs (Kette) | 48/cm | 32/cm | 40/cm | 50/cm |
| Fadengewicht längs | 167 dtex | 84 dtex | 167 dtex | 55 dtex |
| Fadenzahl quer (Schuss) | 23/cm | 30/cm | 20/cm | 27/cm |
| Fadengewicht quer | 167 dtex | 167 dtex | 167 dtex | 334 dtex |

**Tabelle 2: Klebebandeigenschaften verschiedener PEF-Gewebeklebebänder**

| | (I) | (II) | (III) | (IV) |
|---|---|---|---|---|
| Klebstofftyp | Acrylat | Synthesekautschuk | Synthesekautschuk | Acrylat |
| Klebstoffauftrag | 95 g/m² | 60 g/m² | 82,5 g/m² | 50 g/m² |
| Gesamtdicke | 0,26 mm | 0,16 bis 0,18 mm | 0,215 mm | 0,19 mm |
| Klebkraft auf Stahl | 5,0 bis 7,0 N/cm | 10 bis 11 N/cm | 8,0 bis 9,0 N/cm | 3,5 bis 5,5 N/cm |

### Vlieskonstruktionen

**Beispiel 5**

| | |
|---|---|
| Textiler Träger: | Nassvlies (wet-laid) |
| | Flächengewicht: 35 g/m² |
| Zusammensetzung: | 22 Gew.-% PEF, 26,5 Gew.-% Zellulose, 51,5 Gew.-% Binder |
| Haftklebemasse: | Acrylatklebemasse |

Wesentliche Merkmale:
- Dämpfungsklasse B
- Temperaturklasse T3 (nach Ford und LV 312)
- Sehr gute Medienbeständigkeit
- Sehr gute Handeinreißbarkeit

**Beispiel 6**

| | |
|---|---|
| Textiler Träger: | Spinnvlies (spunbond) |
| | Flächengewicht: 34 g/m² |
| Zusammensetzung: | 100 Gew.-% PEF |
| Kaschierklebstoff: | Acrylatklebemasse |
| Folie: | 70 µm 3-Schicht-PE-Folie |
| Haftklebemasse: | Acrylatklebemasse |

Die PE-Folie besteht aus folgenden Schichten (von oben nach unten):
- LDPE mit 5 µm Dicke ohne Ruß, abgemischt mit 1 Gew.-% Antiblockmitteln
- LDPE mit 15 µm Dicke, enthaltend 8 Gew.-% Ruß
- LDPE mit 5 µm ohne Ruß, abgemischt mit 1 Gew.-% Antiblockmitteln

Wesentliche Merkmale:
- Dämpfungsklasse B
- Temperaturklasse T3 (nach Ford und LV 312)
- Sehr gute Medienbeständigkeit
- Sehr gute Handeinreißbarkeit

**Beispiel 7**

| | |
|---|---|
| Textiler Träger: | Nadelvlies (needle-punched) |
| | Flächengewicht: 40 g/m² |
| Zusammensetzung: | 100 Gew.-% PEF |
| Haftklebemasse: | Acrylatklebemasse |

Wesentliche Merkmale:
- Dämpfungsklasse C
- Temperaturklasse T3 (nach Ford und LV 312)
- ehr gute Medienbeständigkeit
- Gute Handeinreißbarkeit

**Beispiel 8**

| | |
|---|---|
| Textiler Träger: | Maliwatt () |
| | Flächengewicht: 70 g/m² |
| Zusammensetzung: | 100 Gew.-% PEF |
| Haftklebemasse: | Acrylatklebemasse |

Wesentliche Merkmale:
- Dämpfungsklasse C
- Temperaturklasse T3 (nach Ford und LV 312)
- Sehr gute Handeinreißbarkeit

## Patentansprüche

1. Verwendung eines Klebebandes zum Ummanteln von langgestrecktem Gut, wobei
a) das Klebeband in einer Schraubenlinie um das langgestreckte Gut geführt wird oder
b) das langgestreckte Gut in axialer Richtung von dem Band umhüllt wird, wobei das Klebeband umfasst ein biobasiertes Trägermaterial, wobei das biobasierte Trägermaterial in Form von Flächenelementen umfassend gesponnene, gewebte und/oder geschmolzene Flächenelemente vorliegt, enthaltend einen biobasierten Polyester
wobei
- auf mindestens einer der beiden Oberflächen des biobasierten Trägermaterials
- mindestens eine Klebemasse vorhanden ist, die teilweise oder vollständig in den Träger eingesunken sein kann, und
- optional mindestens ein Deckmaterial und/oder Transfermaterial vorhanden ist,
**dadurch gekennzeichnet, dass**
der biobasierte Polyester basiert auf mindestens zwei unterschiedlichen biobasierten Monomeren, gewonnen aus Biomasse enthaltenden Kohlenhydraten, worin mindestens ein biobasiertes Monomer ein Furanderivat nach Formel I ist, 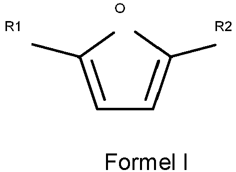 worin jeweils unabhängig voneinander
- R1 eine Carboxy-Gruppe ist und als Substituent eine lineare, verzweigte und/oder cyclische unsubstituierte oder substituierte Kohlenwasserstoff-Gruppe mit 1 bis 20 C-Atomen enthält, die optional O, N oder S-Atome enthält, oder eine Carbonsäure-Gruppe ist oder ein Anhydrid ist,
- R2 eine Carboxy-Gruppe ist und als Substituent eine lineare, verzweigte und/oder cyclische unsubstituierte oder substituierte Kohlenwasserstoff-Gruppe mit 1 bis 20 C-Atomen umfasst, oder eine Carbonsäure-Gruppe ist oder ein Anhydrid ist,
das zweite biobasierte Monomer eine hydroxyfunktionelle Verbindung umfassend 1 bis 100 C-Atome ist,
wobei der Polyester ein mittleres Molekulargewicht Mw größer gleich 1.000 g/mol (gemessen nach der in der Beschreibung angegebenen Messmethode) aufweist und der Anteil an biobasierten Monomeren im biobasierten Polyester größer gleich 55 mol-% in Bezug auf alle Monomere des Polyesters beträgt,
wobei der Anteil an biobasierten Monomeren des biobasierten Polyesters bestimmt wird über das Verhältnis von ¹⁴C/¹²C-Kohlenstoffatomen.

2. Verwendung eines Klebebandes nach Anspruch 1,
**dadurch gekennzeichnet, dass**
die hydroxyfunktionelle Verbindung ein Monool ist, ausgewählt aus Alkoholen, Aminoalkoholen, Monohydroxy funktionellen Polyethern und/oder die hydroxyfunktionelle Verbindung ein Polyol ist, ausgewählt aus Diolen, Triolen, 1 bis 100 C-Atomen umfassenden Polyetherpolyolen, Fruchtsäuren, Polyhydroxyalkanoaten und/oder Sacchariden.

3. Verwendung eines Klebebandes nach Anspruch 1 oder 2 ,
**dadurch gekennzeichnet, dass**
das biobasierte Monomer der Formel I Furan-2,5-dicarbonsäure, ein Anhydrid, ein Monoester und/oder ein Diester der Furan-2,5-dicarbonsäure und das zweite biobasierte Monomer Ethylenglykol ist.

4. Verwendung eines Klebebandes nach zumindest einem der Ansprüche 1 bis 3, **dadurch gekennzeichnet, dass**
der Polyester ein Polyethylenfuranoat (PEF) der Formel IV ist, welcher aus der Umsetzung von Furan-2,5-dicarbonsäure oder eines ihrer Esterderivate mit Ethylenglykol erhalten wird, 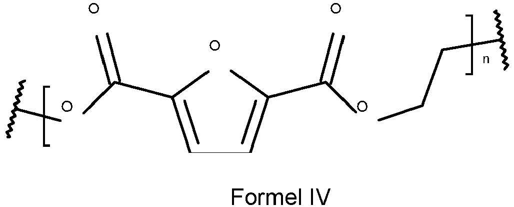 worin n größer gleich 2 ist.

5. Verwendung eines Klebebandes nach einem Ansprüche 1 bis 4,
**dadurch gekennzeichnet, dass**
die Polydispersität zwischen 1,0 und 1,9 liegt.

6. Verwendung eines Klebebandes nach zumindest einem Ansprüche 1 bis 5,
**dadurch gekennzeichnet, dass**
der Anteil an biobasierten Monomeren im biobasierten Polyester größer gleich 75 mol-%, insbesondere größer gleich 80 bis 100 mol-% in Bezug auf alle Monomere des Polyesters beträgt.

## Claims

1. Use of an adhesive tape to sheath elongate material, wherein
a) the adhesive tape is led helically around the elongate material or
b) the elongate material is axially enveloped by the tape,
wherein the adhesive tape comprises a biobased carrier material, wherein the biobased carrier material is in the form of sheetlike elements comprising spun, woven and/or molten sheetlike elements,
comprising a biobased polyester
wherein
- either or both of the surfaces of the biobased carrier material is provided with
- at least one adhesive material, which may be wholly or partly sunk into the carrier, and
- optionally at least one facing material and/or transfer material,
**characterized in that**
the biobased polyester is based on at least two different biobased monomers derived from biomass-containing carbohydrates where at least one biobased monomer is a furan derivative of formula I 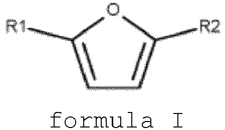 where
- R1 is independently a carboxyl group and by way of substituent contains a linear, branched and/or cyclic substituted or unsubstituted hydrocarbyl group having 1 to 20 carbon atoms which optionally contains O, N or S atoms, or is a carboxylic acid group or an anhydride, and
- R2 is independently a carboxyl group and by way of substituent comprises a linear, branched and/or cyclic substituted or unsubstituted hydrocarbyl group having 1 to 20 carbon atoms, or is a carboxylic acid group or an anhydride,
the second biobased monomer is a hydroxyl-functional compound comprising 1 to 100 carbon atoms,
wherein the polyester has an average molecular weight Mw of greater than or equal to 1000 g/mol (measured by the measuring method specified in the description) and the proportion of biobased monomers in the biobased polyester is greater than or equal to 55 mol% relative to all monomers of the polyester,
wherein the proportion of biobased monomers in the biobased polyester is determined via the ratio of ¹⁴C/¹²C carbon atoms.

2. Use of an adhesive tape according to Claim 1,
**characterized in that**
the hydroxyl-functional compound is a monool selected from alcohols, amino alcohols, monohydroxy-functional polyethers and/or the hydroxyl-functional compound is a polyol selected from diols, triols, polyether polyols comprising 1 to 100 carbon atoms, fruit acids, polyhydroxyalkanoates and/or saccharides.

3. Use of an adhesive tape according to Claim 1 or 2,
**characterized in that**
the biobased monomer of formula I is furan-2,5-dicarboxylic acid, an anhydride, a monoester and/or a diester of furan-2,5-dicarboxylic acid and the second biobased monomer is ethylene glycol.

4. Use of an adhesive tape according to at least one of Claims 1 to 3,
**characterized in that**
the polyester is a polyethylene furanoate (PEF) of formula IV as obtained from the reaction of furan-2,5-dicarboxylic acid, or of one of its ester derivatives, with ethylene glycol 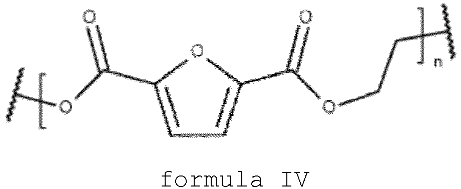 where n is greater than or equal to 2.

5. Use of an adhesive tape according to any of Claims 1 to 4,
**characterized in that**
the polydispersity is between 1.0 and 1.9.

6. Use of an adhesive tape according to at least one of Claims 1 to 5,
**characterized in that**
the proportion of biobased monomers in the biobased polyester is greater than or equal to 75 mol%, in particular greater than or equal to 80 to 100 mol% relative to all monomers of the polyester.

## Revendications

1. Utilisation d'un ruban adhésif pour gainer un produit allongé,
a) le ruban adhésif étant guidé d'une manière hélicoïdale autour du produit allongé ou
b) le produit allongé étant entouré par le ruban dans la direction axiale,
le ruban adhésif comprenant un matériau support, le matériau support biosourcé se présentant sous forme d'éléments bidimensionnels comprenant des éléments bidimensionnels filés, tissés et/ou fondus, contenant un polyester biosourcé,
- sur au moins l'une des deux surfaces du matériau support biosourcé
- au moins une masse adhésive est présente, qui, en partie ou en totalité, peut être enfoncée dans le support, et
- au moins un matériau de couverture et/ou un matériau de transfert étant éventuellement présents, **caractérisée en ce que**
le polyester biosourcé est à base d'au moins deux monomères biosourcés différents, obtenus à partir d'hydrates de carbone contenant une biomasse, au moins un monomère biosourcé étant un dérivé de furane de Formule I 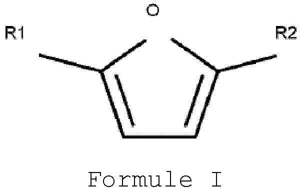 dans laquelle, chacun indépendamment des autres
- R1 représente un groupe carboxy et contient en tant que substituant un groupe hydrocarboné ayant 1 à 20 atomes de carbone, linéaire, ramifié et/ou cyclique, non substitué ou substitué, qui éventuellement contient des atomes O, N ou S, ou représente un groupe acide carboxylique ou représente un anhydride,
- R2 représente un groupe carboxy et comprend en tant que substituant un groupe hydrocarboné ayant 1 à 20 atomes de carbone linéaire, ramifié et/ou cyclique, non substitué ou substitué, ou représente un groupe acide carboxylique ou représente un anhydride,
le deuxième monomère biosourcé est un composé hydroxy-fonctionnel comprenant 1 à 100 atomes de carbone,
le polyester ayant une masse moléculaire moyenne Mw supérieure ou égale à 1 000 g/mol (mesurée par la méthode de mesure indiquée dans la description) et la proportion de monomères biosourcés dans le polyester biosourcé étant supérieure ou égale à 55 % en moles par rapport à la totalité des monomères du polyester,
la proportion des monomères biosourcés du polyester biosourcé étant déterminée par le rapport entre atomes de carbone ¹⁴C/¹²C.

2. Utilisation d'un ruban adhésif selon la revendication 1,
**caractérisée en ce que**
le composé hydroxy-fonctionnel est un monool, choisi parmi les alcools, les aminoalcools, les polyéthers à fonctionnalité monohydroxy et/ou le composé hydroxy-fonctionnel est un polyol choisi parmi les diols, les triols, les polyétherpolyols comprenant 1 à 100 atomes de carbone, les acides de fruits, les polyhydroxyalcanoates et/ou les saccharides.

3. Utilisation d'un ruban adhésif selon la revendication 1 ou 2,
**caractérisée en ce que**
le monomère biosourcé de Formule I est un acide furane-2,5-dicarboxylique, un anhydride, un monoester et/ou un diester de l'acide furane-2,5-dicarboxylique, et le second monomère biosourcé est l'éthylèneglycol.

4. Utilisation d'un ruban adhésif selon au moins l'une des revendications 1 à 3,
**caractérisée en ce que**
le polyester est un polyéthylènefuranoate (PEF) de Formule IV, qui est obtenu par la réaction d'acide furane-2,5-dicarboxylique ou d'un de ses dérivés esters avec de l'éthylèneglycol, 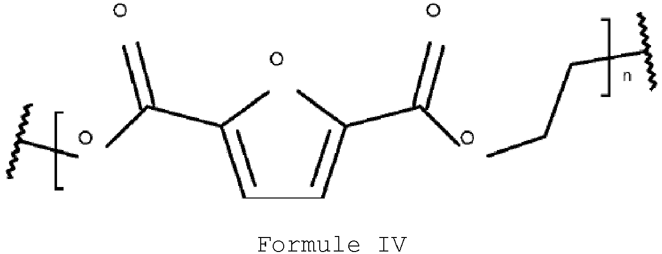 dans laquelle n est supérieur ou égal à 2.

5. Utilisation d'un ruban adhésif selon l'une des revendications 1 à 4,
**caractérisée en ce que**
la polydispersité est comprise entre 1,0 et 1,9.

6. Utilisation d'un ruban adhésif selon au moins l'une des revendications 1 à 5,
**caractérisée en ce que**
la proportion des monomères biosourcés dans le polyester biosourcé est supérieure ou égale à 75 % en moles, en particulier supérieure ou égale à 80 à 100 % en moles, par rapport à la totalité des monomères du polyester.
